# EUROPEAN PATENT APPLICATION

(11) **EP 4 734 494 A1**
(43) Date of publication of application: **29.04.2026**
(21) Application number: 24847687.1
(22) Date of filing: 07.05.2024
(51) Int. Cl.: H04M 3/56, H04M 3/51

(54) **MULTI-PARTY AUDIO CALL PROCESSING METHOD AND ELECTRONIC DEVICE**

(30) Priority: 28.07.2023 CN 202310946868
(71) Applicant: Huawei Technologies Co., Ltd., Shenzhen, Guangdong 518129 (CN)
(72) Inventor: LIAO, Zhichao, Shenzhen, Guangdong 518129 (CN)
(74) Representative: Goddar, Heinz J.
(86) International application number: PCT/CN2024/091492
(87) International publication number: WO 2025/025721

(57) **Abstract**

This application provides a multi-party audio call processing method and an electronic device. The method includes: determining a first customer service agent during a multi-party audio call when the multi-party audio call is established, where the multi-party audio call is an audio call performed simultaneously between a consultation party and a plurality of customer service agents, and the first customer service agent is a customer service agent with a highest priority in the plurality of customer service agents; and when concurrent speeches of the plurality of customer service agents occur during the multi-party audio call, blocking an audio of a customer service agent other than the first customer service agent in the plurality of customer service agents, and pushing an audio of the first customer service agent to a terminal of the consultation party. This application can reduce mutual interference between the concurrent speeches, and improve user experience.

## Description

This application claims priority to Chinese Patent Application No. 202310946868.X, filed with the China National Intellectual Property Administration on July 28, 2023 and entitled "MULTI-PARTY AUDIO CALL PROCESSING METHOD AND ELECTRONIC DEVICE", which is incorporated herein by reference in its entirety.

### TECHNICAL FIELD

Embodiments of this application relate to the field of audio customer service technologies, and in particular, to a multi-party audio call processing method and an electronic device.

### BACKGROUND

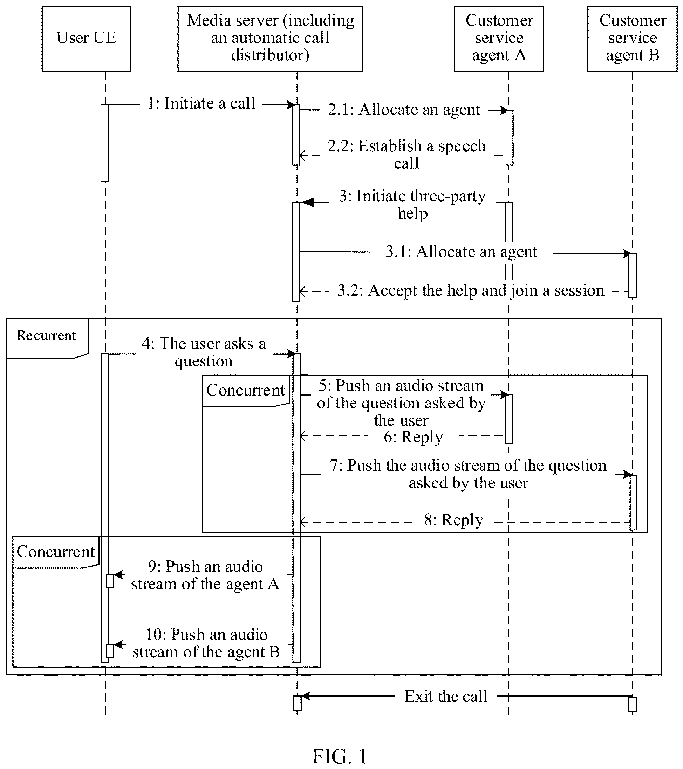

Currently, a multi-party call (that is, a multi-party audio call) often occurs in an audio customer service scenario. For example, during a call between a user (that is, a consultation party) and a customer service agent, a quality inspector (who may also be considered as a customer service agent relative to the user) joins the call and performs real-time quality inspection, to form a three-party call. Alternatively, as shown in FIG. 1, a customer service agent A who is in a call with a user initiates three-party help to another customer service agent B (a customer service agent that is asked for help), and the customer service agent B joins the call, to form a three-party call.

However, during the multi-party call, a plurality of participants (customer service agents) on a call center side may speak simultaneously, and concurrent speeches are generated. As a result, all audios of the plurality of customer service agents are pushed to a user side. As shown in FIG. 1, an audio of the customer service agent A and an audio of the customer service agent B are simultaneously pushed by a media server to user equipment (User Equipment, UE) and simultaneously played on a user UE side. In this case, the audios of the plurality of customer service agents interfere with each other, causing unclear speeches played on the UE and degraded user experience.

### SUMMARY

This application provides a multi-party audio call processing method and an electronic device, to reduce mutual interference between concurrent speeches by blocking audios of a part of participants in the concurrent speeches, so as to improve user experience.

According to a first aspect, this application provides a multi-party audio call processing method, applied to an audio customer service scenario. The method includes: determining a first customer service agent during a multi-party audio call when the multi-party audio call is established, where the multi-party audio call is an audio call performed simultaneously between a consultation party and a plurality of customer service agents, and the first customer service agent is a customer service agent with a highest priority in the plurality of customer service agents; and when concurrent speeches of the plurality of customer service agents occur during the multi-party audio call, blocking an audio of a customer service agent other than the first customer service agent in the plurality of customer service agents, and pushing an audio of the first customer service agent to a terminal of the consultation party.

In a possible implementation, determining the first customer service agent during the multi-party audio call includes: determining the first customer service agent based on a configuration factor, where the configuration factor includes one or more of roles and skill matching degrees of the plurality of customer service agents, and an intended customer service agent of the consultation party for a current consultation topic, and the skill matching degrees are matching degrees between skill tags of the plurality of customer service agents and the current consultation topic.

In a possible implementation, the configuration factor further includes one or more of last reply information, quantities of valid replies of the plurality of customer service agents during the multi-party audio call, and service satisfaction degrees and violation warnings of the plurality of customer service agents, and the last reply information is information about a customer service agent that provides a last reply for the consultation party during the multi-party audio call when the consultation party raises the current consultation topic; and
before determining the first customer service agent during the multi-party audio call, the method further includes: collecting statistics about one or more of the quantities of valid replies of the plurality of customer service agents during the multi-party audio call, and the service satisfaction degrees and the violation warnings of the plurality of customer service agents.

In a possible implementation, when there are a plurality of configuration factors, determining the first customer service agent based on the configuration factor includes:
calculating a composite score of the configuration factors by using a weighted average or gradient mode; and determining the first customer service agent based on the composite score.

In a possible implementation, before calculating the composite score of the configuration factors by using the weighted average or gradient mode, the method further includes: determining whether the current consultation topic includes the intended customer service agent;
determining the first customer service agent during the multi-party audio call includes: using the intended customer service agent as the first customer service agent; and
calculating the composite score of the configuration factors by using the weighted average or gradient mode includes: when the current consultation topic includes no intended customer service agent, calculating a composite score of other configuration factors in the configuration factors by using the weighted average or gradient mode.

In a possible implementation, determining the first customer service agent based on the composite score includes:
sequentially comparing individual scores of the plurality of customer service agents based on a priority sequence of preset configuration factors when the composite scores are equal, where the individual score is an individual score of the preset configuration factor.

In a possible implementation, after blocking the audio of the customer service agent other than the first customer service agent in the plurality of customer service agents, the method further includes: notifying the other customer service agent of the blocking.

In a possible implementation, during the multi-party audio call, the method further includes: collecting statistics about at least one of service satisfaction rates and violation warning scores of the plurality of customer service agents; and/or
after pushing the audio of the first customer service agent to the terminal of the consultation party, the method further includes: updating, to information about the first customer service agent, the information about the customer service agent that provides the last reply for the consultation party.

According to a second aspect, this application provides a first electronic device, including a processor and a memory. The memory stores a computer program, and the processor is configured to perform the following operations when running the computer program:
notifying a second electronic device when a multi-party audio call is established, to enable the second electronic device to determine a first customer service agent during the multi-party audio call, where the multi-party audio call is an audio call performed simultaneously between a consultation party and a plurality of customer service agents, and the first customer service agent is a customer service agent with a highest priority in the plurality of customer service agents; receiving information about the first customer service agent sent by the second electronic device; and when concurrent speeches occur during the multi-party audio call, blocking an audio of a customer service agent other than the first customer service agent in the plurality of customer service agents based on the information, and pushing an audio of the first customer service agent to a terminal of the consultation party.

In a possible implementation, notifying the second electronic device includes: sending, to the second electronic device, one or more pieces of information of roles of the plurality of customer service agents, a current consultation topic of the consultation party, and an intended customer service agent of the consultation party for the current consultation topic.

In a possible implementation, before pushing one or more pieces of information of the current consultation topic and the intended customer service agent to the second electronic device, wherein the operations further comprise: sending a consultation audio of the consultation party to a third electronic device, to convert the consultation audio into consultation text; receiving the consultation text, and sending the consultation text to a fourth electronic device, to identify one or more of the current consultation topic and the intended customer service agent; and receiving one or more pieces of information of the current consultation topic and the intended customer service agent that are returned by the fourth electronic device.

In a possible implementation, the processor is further configured to: collect statistics about at least one of quantities of valid replies of the plurality of customer service agents during the multi-party audio call, and violation warning scores and service satisfaction rates of the plurality of customer service agents; and pushing update information to the second electronic device, where the update information is at least one of the information about the first customer service agent, the quantities of valid replies of the plurality of customer service agents during the multi-party audio call, and the violation warning scores and the service satisfaction rates of the plurality of customer service agents.

In a possible implementation, the processor is further configured to: notify an intelligent agent assistant of the blocking operation, to provide a prompt for the other customer service agent.

According to a third aspect, this application provides a second electronic device, including a processor and a memory. The memory stores a computer program, and the processor is configured to perform the following operations when running the computer program:
receiving a notification sent by a first electronic device when a multi-party audio call is established; determining a first customer service agent based on the notification, where the multi-party audio call is an audio call performed simultaneously between a consultation party and a plurality of customer service agents, and the first customer service agent is a customer service agent with a highest priority in the plurality of customer service agents; and sending information about the first customer service agent to the first electronic device.

In a possible implementation, receiving the notification of the first electronic device when the multi-party audio call is established includes: receiving at least one piece of information of roles of the plurality of customer service agents, a current consultation topic of the consultant, and an intended customer service agent of the consultation party that are pushed by the first electronic device when the multi-party audio call is established; and determining the first customer service agent based on the notification includes: determining the first customer service agent based on at least one piece of information of the roles of the plurality of customer service agents, the current consultation topic, and the intended customer service agent.

In a possible implementation, determining the first customer service agent based on the notification further includes: determining the first customer service agent based on at least one of last reply information, and service satisfaction rates and violation warning scores of the plurality of customer service agents, where the last reply information is information about a customer service agent that provides a last reply for the consultation party during the multi-party audio call when the consultation party raises the current consultation topic.

In a possible implementation, the processor is further configured to: update the last reply information to the information about the first customer service agent, and collect statistics about at least one of the service satisfaction rates and the violation warning scores of the plurality of customer service agents, and quantities of valid replies of the plurality of customer service agents during the multi-party audio call; or
before determining the first customer service agent based on the notification, the processor is further configured to: receive at least one of quantities of valid replies of the plurality of customer service agents during the multi-party audio call and the violation warning scores of the plurality of customer service agents that are sent by the first electronic device; and update at least one of the service satisfaction rates and the violation warning scores of the plurality of customer service agents, and the quantities of valid replies of the plurality of customer service agents during the multi-party audio call.

According to a fourth aspect, this application provides a third electronic device, including a processor and a memory. The memory stores a computer program, and the processor is configured to perform the following operations when running the computer program:
receiving an audio sent by a first electronic device, and converting the audio into text, where the audio is a consultation audio of a consultation party during a multi-party audio call; and returning the text to the first electronic device, to determine a first customer service agent, where the first customer service agent is a customer service agent with a highest priority in a plurality of customer service agents during the multi-party audio call.

According to a fifth aspect, this application provides a fourth electronic device, including a processor and a memory. The memory stores a computer program, and the processor is configured to perform the following operations when running the computer program:
receiving text sent by a first electronic device, and identifying, from the text, at least one of a consultation topic and an intended customer service agent of a consultation party during a multi-party audio call; and returning at least one of the consultation topic and the intended customer service agent to the first electronic device, to determine a first customer service agent, where the first customer service agent is a customer service agent with a highest priority in a plurality of customer service agents during the multi-party audio call.

According to a sixth aspect, this application provides a computer-readable storage medium. The computer-readable storage medium stores a computer program. When the computer program runs on a computer, the computer is enabled to perform the method according to any one of the possible implementations of the first aspect or the operations performed by the processor according to any one of the possible implementations of the second aspect to the fifth aspect.

According to a seventh aspect, this application provides a chip system, performing the method according to any one of the possible implementations of the first aspect or the operations performed by the processor according to any one of the possible implementations of the second aspect to the fifth aspect.

According to an eighth aspect, this application provides a computer program. When executed by a computer, the computer program is used for performing the method according to any one of the possible implementations of the first aspect or the operations performed by the processor according to any one of the possible implementations of the second aspect to the fifth aspect.

In a possible design, the program in the eighth aspect may be all or partially stored in a storage medium that is encapsulated together with a processor, or may be all or partially stored in a memory that is not encapsulated together with a processor.

### BRIEF DESCRIPTION OF DRAWINGS

FIG. 1 is a schematic flowchart of a three-party audio call in a conventional technology;
FIG. 2 is a diagram of a network architecture related to a method and a device according to an embodiment of this application;
FIG. 3 is a schematic flowchart of a multi-party audio call processing method according to an embodiment of this application;
FIG. 4a is a diagram of configuration factors according to an embodiment of this application;
FIG. 4b is another diagram of configuration factors according to an embodiment of this application;
FIG. 4c is still another diagram of configuration factors according to an embodiment of this application; and
FIG. 5a and FIG. 5b are a schematic flowchart of a multi-party audio call processing method according to an embodiment of this application.

### DESCRIPTION OF EMBODIMENTS

Terms used in implementations of this application are only used to explain specific embodiments of this application, but are not intended to limit this application.

Method embodiments and device embodiments of this application relate to an audio customer service scenario, for example, a multi-party audio call generated after a call is manually made to a call center when a customer (a user, that is, a consultation party) has a requirement like a problem consultation or a product or service use complaint, or a multi-party audio call generated when a customer service representative calls a customer through the call center to recommend a product, pay a return visit, or the like.

The call center may be a telephone call center, an IP call center, a multimedia call center, or the like. A speech consultation request sent by the user through a terminal (for example, a fixed-line phone or a mobile phone) may be sent to the call center through a public switched telephone network (Public Switched Telephone Network, PSTN), an IP multimedia subsystem (IP multimedia subsystem, IMS), or the like.

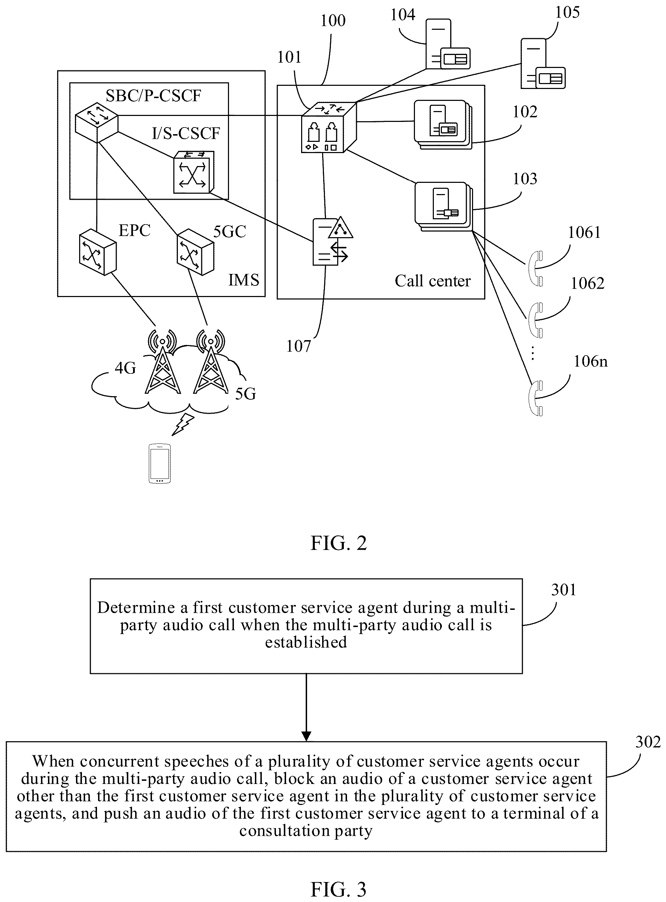

As shown in FIG. 2, when having a requirement like a problem consultation or a use complaint, a customer (a user) sends a speech consultation request through 4G or 5G user equipment (User Equipment, UE). If the UE is 4G UE or has a 4G function enabled, the UE processes a user speech into an audio signal and then sends the audio signal to a 4G core network (that is, an evolved packet core (Evolved Packet Core, EPC)) through a base station. The EPC may include a serving/public data network gateway (Serving/Public Data Network Gateway, S/P-GW). If the UE is 5G UE or has a 5G function enabled, the UE processes a user speech into an audio signal and then sends the audio signal to a 5G core network (5G Core, 5GC) through a base station. The 5GC may include a user plane function (user plane function, UPF) network element and an access and mobility management function (access and mobility management function, AMF) network element.

The EPC or the 5GC sends the speech consultation request of the user to a call center 100 through a session border controller (Session Border Controller, SBC) and a proxy-call session control function (Proxy-Call Session Control Function, P-CSCF), or an interrogating call session control function (Interrogating Call Session Control Function, I-CSCF) network element and a serving CSCF (Serving CSCF, S-CSCF) network element.

The call center 100 includes a media server 101, a service platform 102, and an intelligent agent assistant 103. The media server 101 is configured to: access an audio of the user, allocate at least one of customer service agents 1061 to 106n, and establish a call between the user and the customer service agent (which is at least one of 1061 to 106n). Functions of the service platform 102 and the intelligent agent assistant 103 may be integrated into the media server 101.

Optionally, the call center 100 may further include a signaling server 107, or a function of the signaling server 107 may be integrated into the media server 101.

Optionally, the media server 101 may be further configured for video media processing and playback, audio/video conference site application and release, audio/video encoding/decoding, desktop sharing, electronic signature processing, and the like.

Optionally, the media server may further include an automatic call distributor, or have a queuing function.

After receiving the speech consultation request of the user (a consultation party), the call center allocates a customer service agent to the user. After an audio call is established between the user and the customer service agent, when the customer service agent cannot meet the requirement of the user due to a low skill or service level of the customer service agent and initiates a three-party help request, the call center routes the three-party help request to another customer service agent. The another customer service agent accepts the request and joins the current call, to form a multi-party audio call. Alternatively, after an audio call is established between the user and the customer service agent, a quality inspector joins the current call through a real-time operation, to form a multi-party audio call. Alternatively, a customer service agent calls a customer (a consultation party) to recommend a product, and establish an audio call. However, during the call, the customer service agent cannot meet a consultation requirement of the customer and initiates a three-party help request, to enable a third participant (that is, another customer service agent) to join the call, so as to form a multi-party audio call, or the like.

During the multi-party audio call, when two parties speak simultaneously, for example, the two customer service agents speak simultaneously or the customer service agent and the quality inspector speak simultaneously, to avoid interference generated by simultaneously playing concurrent speeches and avoid inconsistent audio content of the two customer service agents or the customer service agent and the quality inspector that speak simultaneously, the call center may perform processing by using a multi-party audio call processing method provided in embodiments of this application.

In a variant of the foregoing embodiment, the call center 100 may further include an automatic speech recognition (Automatic Speech Recognition, ASR) device 104 and an intelligent platform 105. The ASR device 104 is configured to convert an audio during the multi-party audio call into text. The intelligent platform 105 is configured to: analyze content of the text, and identify a consultation topic and a skill related to the consultation topic. Optionally, one or more functions of the ASR device and the intelligent platform may be integrated into the media server.

FIG. 3 shows an embodiment of a multi-party audio call processing method provided in this application. The method includes the following steps.

Step 301: A call center determines a first customer service agent during a multi-party audio call when the multi-party audio call is established, where the multi-party audio call is an audio call performed simultaneously between a consultation party and a plurality of customer service agents, and the first customer service agent is a customer service agent with a highest priority in the plurality of customer service agents. A priority in this application is a priority of pushing an audio of a customer service agent to a terminal (for example, UE) of the consultation party. For example, after establishing the multi-party audio call, a media server notifies a service platform. After receiving the notification, the service platform determines the first customer service agent during the multi-party audio call. Content notified by the media server may include roles participating in the multi-party audio call, for example, a user (or the consultation party), a customer service agent A, a customer service agent B, and a quality inspector. After a function of the service platform is integrated into the media server, the media server may alternatively determine the first customer service agent during the multi-party audio call.

A specific manner of determining the first customer service agent may be: determining the first customer service agent based on preset priorities of customer service agents. For example, the call center includes ten customer service agents, and priorities of the ten customer service agents are set by using English letters A to Z. A sequence of the English letters corresponds to priorities in descending order. For example, A corresponds to a highest priority, and Z corresponds to a lowest priority. The priority of the customer service agent may alternatively be represented by using a value. For example, a priority value of 1 indicates a lowest priority, and a larger value indicates a higher priority. When at least two of the ten customer service agents appear during a same audio call, a customer service agent with a highest priority is the first customer service agent.

Alternatively, a specific manner of determining the first customer service agent may be: determining the first customer service agent based on a configuration factor, where the configuration factor includes one or more of roles and skill matching degrees of the plurality of customer service agents, and an intended customer service agent of the consultation party. For example, when a role of a customer service agent participating in the current multi-party audio call is a help-providing party or a quality inspector, there is a higher probability or a higher priority of pushing an audio of the customer service agent to a consultation party device UE, and there is a higher probability of determining the customer service agent as the first customer service agent. When a role of a customer service agent participating in the current multi-party audio call is not a help-providing party or a quality inspector, there is a lower probability or a lower priority of pushing an audio of the customer service agent to a consultation party terminal UE, and there is a lower probability of determining the customer service agent as the first customer service agent.

The skill matching degree is a matching degree between a skill tag of the customer service agent participating in the current multi-party audio call and a consultation topic of the consultation party. A higher matching degree indicates a higher probability or a higher priority of pushing an audio of a corresponding customer service agent to the consultation party device UE, and a higher probability of determining the corresponding customer service agent as the first customer service agent. On the contrary, a lower matching degree indicates a lower probability or a lower priority of pushing an audio of a corresponding customer service agent to the consultation party device UE, and a lower probability of determining the corresponding customer service agent as the first customer service agent.

It is assumed that the consultation party expresses an intended customer service agent during the current multi-party audio call, that is, the consultation party expects a specific customer service agent to speak or reply. In this case, an audio of the intended customer service agent is pushed to the consultation party device, or a probability or a priority of pushing the audio of the intended customer service agent to the consultation party device UE is high. The consultation party may ask a plurality of questions (perform a plurality of consultations) during the current multi-party audio call. Each question may be answered by an intended customer service agent, or a part of questions may be answered by the intended customer service agent. The matching degree may be a matching degree, for a specific question (consultation), between a skill tag of a customer service agent and a consultation topic corresponding to the question (consultation).

In some embodiments, the configuration factor may further include: one or more of last reply information, quantities of valid replies of the plurality of customer service agents during the current multi-party audio call, and service satisfaction rates and violation warning scores of the plurality of customer service agents. The last reply information is information about a customer service agent that provides a last reply for the consultation party during the current multi-party audio call when the consultation party raises the current consultation topic. For example, it is assumed that the consultation party asks three questions during the current multi-party audio call. When the consultation party asks a first question, the last reply information is null. If a customer service agent A answers the first question (where it is assumed that three customer service agents A, B, and C participate in the current multi-party audio call), when the consultation party asks a second question (before the second question is answered), the last reply information is information about the customer service agent A. If the customer service agent C answers the second question, when the consultation party asks a third question (before the third question is answered), the last reply information is information about the customer service agent C. The rest may be deduced by analogy. The quantities of valid replies (excluding a blocked audio reply) of the plurality of customer service agents during the current multi-party audio call may be collected by the media server or the service platform in real time. A customer service agent with a larger quantity of valid replies indicates a higher priority of pushing an audio of the customer service agent to the consultation party, and a higher probability of determining the customer service agent as the first customer service agent. A higher service satisfaction rate of a customer service agent participating in the current multi-party audio call indicates a higher priority of pushing an audio of the customer service agent to the consultation party, and a higher probability of determining the customer service agent as the first customer service agent. The service satisfaction rate may not be limited to a service satisfaction rate during the current multi-party audio call, or may not be limited to a service satisfaction rate obtained on the current day by the customer service agent participating in the current multi-party audio call. A violation warning score of the customer service agent participating in the current multi-party audio call may not be limited to a violation warning score during the current multi-party audio call, or may not be limited to a violation warning score accumulated on the current day by the customer service agent participating in the current multi-party audio call. A higher violation warning score of the customer service agent participating in the current multi-party audio call indicates a lower priority of pushing an audio of the customer service agent to the consultation party, and a lower probability of determining the customer service agent as the first customer service agent.

When the configuration factor is a single configuration factor, a priority of a customer service agent is calculated by using the single configuration factor, and the first customer service agent is determined based on the priority. For example, if a role of a customer service agent is used as a configuration factor, when concurrent speeches occur (to be specific, since the plurality of customer service agents participating in the current multi-party audio call speak simultaneously, the media server simultaneously receives a plurality of channels of audios from the plurality of customer service agents), a customer service agent A denoted as a help-providing agent or a quality inspector has an absolute priority of pushing an audio of the customer service agent A to the consultation party device, that is, the customer service agent A has a highest priority and is determined as the first customer service agent, and a customer service agent B denoted as a customer service agent is determined to have a low priority.

When there are a plurality of configuration factors, determining the first customer service agent based on the configuration factor may include: calculating a composite score of the configuration factors by using a weighted average or gradient mode, and determining the first customer service agent based on the composite score. The composite score of the configuration factors is a composite score of a priority of a customer service agent.

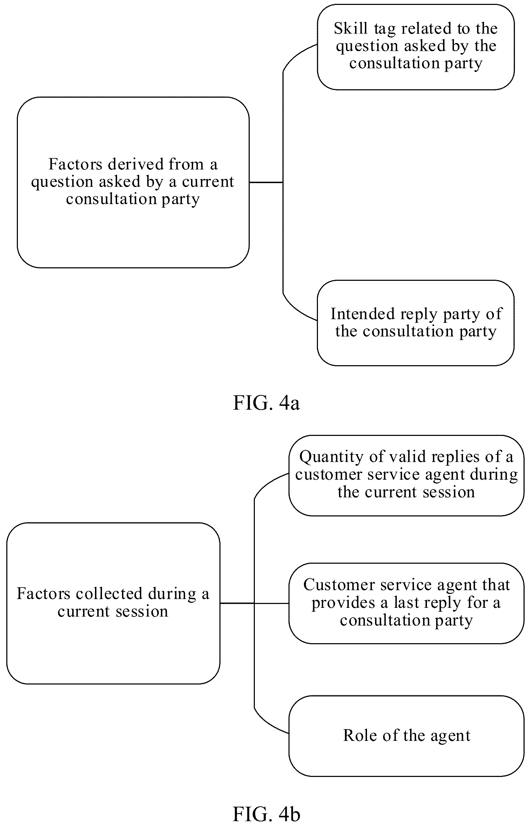

As shown in FIG. 4a, there are two configuration factors, which are factors derived from a question asked by the current user (consultation party). One of the two configuration factors is a skill tag related to the question asked by the consultation party, that is, a matching degree between a skill tag of a customer service agent and a consultation topic. For example, if a customer service agent A has all skill tags related to a specific consultation topic, an individual score of a configuration factor, namely, a skill matching degree, of the customer service agent A is 10. The other one of the two configuration factors is an intended reply party of the consultation party. To be specific, the consultation party tends to enable a specific customer service agent to reply, and the customer service agent is the intended reply party, that is, the intended customer service agent. For example, if a customer service agent A is the intended reply party of the consultation party, the customer service agent A obtains a score of 6, to be specific, an individual score of a configuration factor, namely, the intended reply party, of the customer service agent A is 6.

The service platform may perform composite calculation on individual scores (for example, 10 and 6) of the two configuration factors in a weighted calculation manner, to obtain a real-time priority score of the customer service agent A, that is, a composite score of the configuration factors of the customer service agent A. A composite score of the configuration factors of another customer service agent during a session that the customer service agent A participates in is calculated in a same manner.

As shown in FIG. 4b, there are three configuration factors, which are factors collected during a current session (the multi-party audio call). One of the three configuration factors is a quantity of valid replies of a customer service agent (which is collected in real time, where a blocked reply is considered as an invalid reply and is excluded) during the current session. Another one of the three configuration factors is a customer service agent that provides a last reply for the consultation party. Still another one of the three configuration factors is a role of the customer service agent. First, the three configuration factors are respectively assigned with corresponding scores (individual scores) based on statistic information. For example, for two customer service agents during the current session, a customer service agent with a larger quantity of valid replies obtains a score of 3, and a customer service agent with a smaller quantity of valid replies obtains a score of 0. A customer service agent that provides a last reply for the consultation party obtains a score of 3, and a customer service agent that does not provide the last reply for the consultation party obtains a score of 0. A customer service agent whose role is a quality inspector or a customer service agent that is asked for help obtains a score of 5, and a customer service agent whose role is a customer service agent obtains a score of 0. Then, weighted averaging is performed on the individual scores of the three configuration factors. For example, a composite score of configuration factors of one customer service agent during the current session is equal to a×3+b×0+c×5, and a composite score of configuration factors of the other customer service agent is equal to a×0+b×3+c×0. A customer service agent with a higher composite score is the first customer service agent. Weight coefficients meet a+b+c=1, and values of a, b, and c may be set based on an actual requirement. Higher importance or a higher priority of a configuration factor indicates a larger weight and a larger value of a corresponding weight coefficient. Correspondingly, other weight coefficients are smaller.

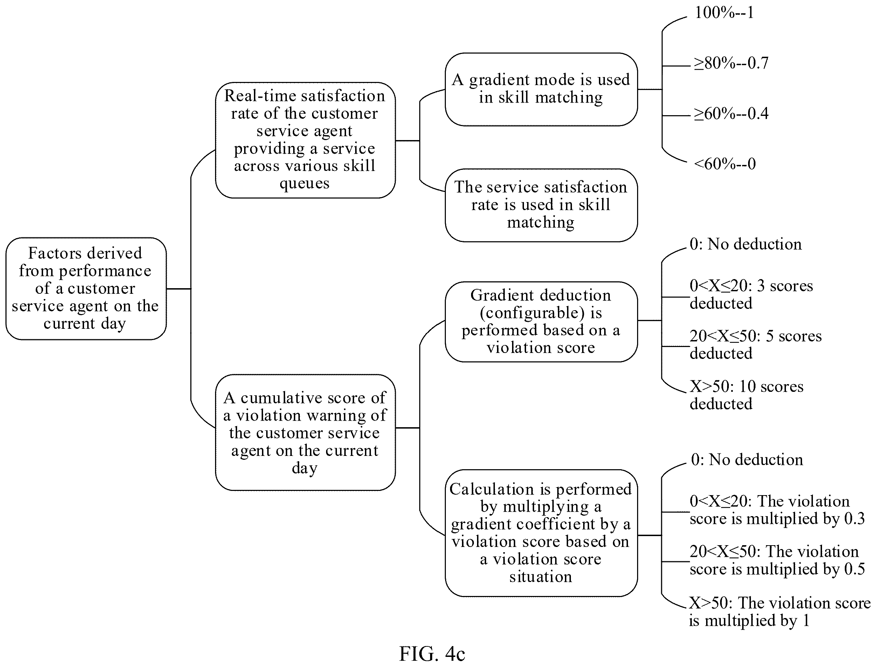

As shown in FIG. 4c, in a variant of the foregoing embodiment, the configuration factor may further include factors derived from performance of a customer service agent on the current day: a service satisfaction degree (a real-time satisfaction rate of the customer service agent providing a service across various skill queues) and a violation warning on the current day of the customer service agent.

When determining a priority, the call center may obtain a matching degree based on a skill queue corresponding to a consultation topic and consider a satisfaction rate of a corresponding skill. For example, proficiency of different skills (which are identified by skill tags) of the customer service agent may be reflected by using the service satisfaction rate. Correspondingly, the proficiency may be quantized by using an individual score of the matching degree and an individual score of the service satisfaction rate. Different skill tags can reflect different skill services. In an actual implementation, skill queues may be designed based on the different skill tags. A specific skill queue is an information queue of a customer service agent that has a skill tag corresponding to the skill queue. A plurality of keywords may be related to a question (consultation topic) asked by the user and correspond to a plurality of different service fields/topics. Skill queues may be classified based on services. The skill queue and the skill tag may be roughly equal. A score of an individual skill (a score of an individual queue) of a customer service agent may be a total score of skill matching degrees/a quantity of skill tags related to the consultation topic. An individual score of the service satisfaction degree may be the real-time satisfaction rate of the customer service agent providing a service across various skill queues. When level classification is further performed on individual skills of the customer service agent that match the consultation topic, the priority of the customer service agent may be obtained by calculating the score of the individual queue multiplied by the real-time satisfaction rate of the service, and a higher score indicates a higher level. This helps further improve a priority of the customer service agent. The priority of the customer service agent may alternatively be obtained through gradient assignment of the service satisfaction rate. The gradient assignment of the service satisfaction rate is as follows: When the satisfaction rate is 100%, an assigned value is 1; when 80%≤the satisfaction rate<100%, an assigned value is 0.7; when 60%≤the satisfaction rate<80%, an assigned value is 0.4; or when the satisfaction rate<60%, an assigned value is 0. The service satisfaction degree may be obtained and updated by performing a satisfaction survey after each call ends on the current day.

An individual score of the configuration factor, namely, the violation warning on the current day, may be a gradient deduction score based on a cumulative score X of the violation warning on the current day. The gradient deduction may be configured based on an actual situation. For example, when X=0, the individual score of the configuration factor is 0; when 0<X≤20, the individual score of the configuration factor is 3; when 20<X≤50, the individual score of the configuration factor is 5; or when X>50, the individual score of the configuration factor is 10. The individual score of the configuration factor corresponding to the cumulative score X of the violation warning of the customer service agent on the current day may alternatively be a gradient coefficient multiplied by the cumulative score X of the violation warning. For example, when X=0, the individual score of the configuration factor is X×0; when 0<X≤20, the individual score of the configuration factor is X×0.3; when 20<X≤50, the individual score of the configuration factor is X×0.5; or when X>50, the individual score of the configuration factor is X×1. The gradient coefficient may be configured based on an actual situation. This is merely an example for description and is not limited herein. During calculation of a composite score of configuration factors of any customer service agent during the current session, an individual score of the configuration factor may be subtracted from the composite score of the configuration factors shown in FIG. 4a and FIG. 4b, to obtain the composite score of the configuration factors of any customer service agent during the current session.

When composite scores of the configuration factors of the customer service agents during the current session are equal, individual scores of the configuration factors of the customer service agents during the current session are compared sequentially based on a priority sequence of preset configuration factors. For example, the priority sequence of the preset configuration factors is: an intended customer service agent>a skill matching degree>a role. When the composite scores of the configuration factors are equal, comparison is first performed to determine whether there is an intended customer service agent in the customer service agents (by comparing the individual scores of the configuration factors). If there is an intended customer service agent in the customer service agents, the comparison is not continued, and the intended customer service agent is determined as the first customer service agent. Otherwise, individual scores of the skill matching degrees continue to be compared, and a customer service agent with a high individual score of the skill matching degree is determined as the first customer service agent. If the individual scores of the skill matching degrees are equal, individual scores of roles continue to be compared. The rest may be deduced by analogy, until the first customer service agent is determined.

The configuration factor and a method for determining the first customer service agent based on the configuration factor may be preset based on an actual situation. For example, the configuration factor, namely, the intended customer service agent, may be denoted as an absolute priority. In other words, provided that a consultation party expresses an intended customer service agent during a multi-party audio call, the intended customer service agent is determined as the first customer service agent. For example, when there are a plurality of preset configuration factors and the intended customer service agent is included, it is first determined whether there is an intended customer service agent. If there is an intended customer service agent, other configuration factors are not calculated. If there is no intended customer service agent, the first customer service agent is determined based on other configuration factors.

This is merely an example for description and is not limited herein. The preset may be operated by a system administrator of the call center.

Step 302: When concurrent speeches of the plurality of customer service agents occur during the multi-party audio call, the call center blocks an audio of a customer service agent other than the first customer service agent, and pushes an audio of the first customer service agent (a customer service agent with a highest priority) to a terminal on a user (customer or consultation party) side, to avoid mutual interference caused by simultaneously pushing the concurrent speeches from a customer service agent side to the user side and even avoid a problem of inconsistent replies of the customer service agents. For example, the media server blocks an audio of a customer service agent with a low priority and reduces a quantity of audios received by the consultation party UE, to reduce audio interference, reduce a risk of inconsistent replies of the customer service agents, and improve experience of the consultation party. Blocking the audio of the customer service agent with a low priority may be stopping receiving the audio of the customer service agent with a low priority on a media server side, or may be stopping, by the media server, pushing the audio of the customer service agent with a low priority to the terminal of the consultation party.

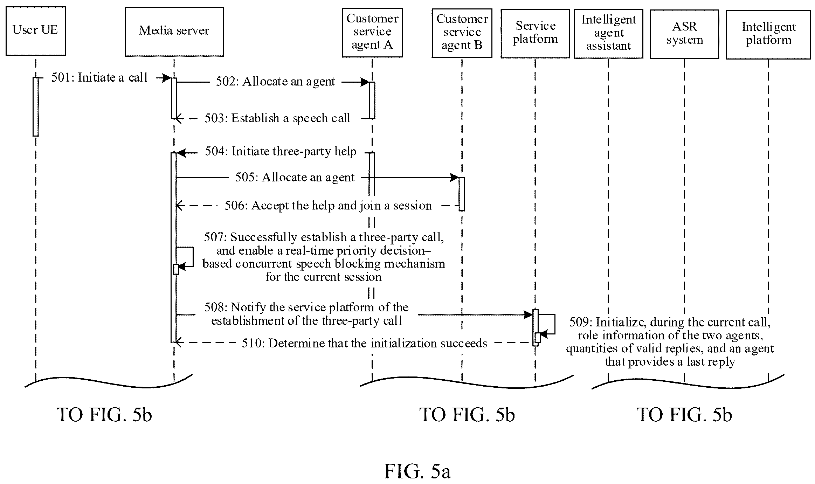

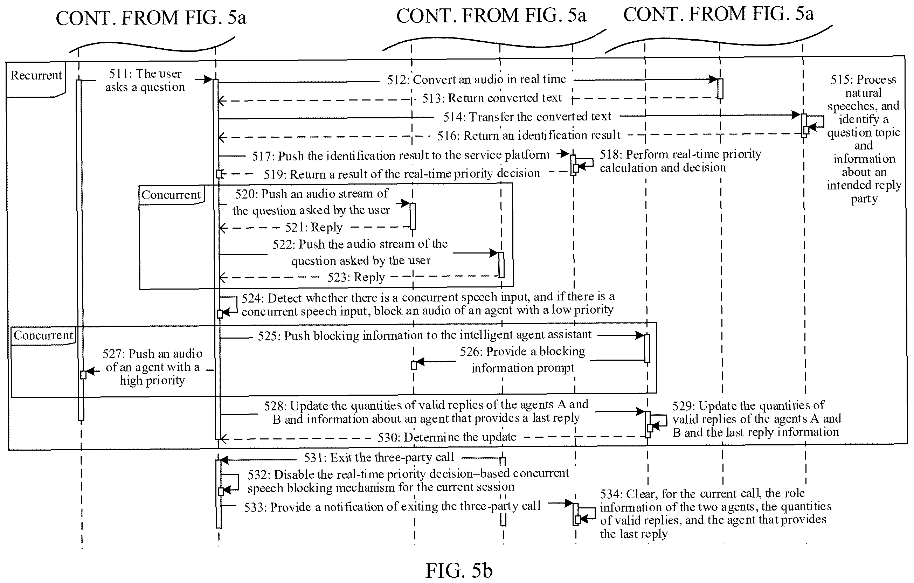

FIG. 5a and FIG. 5b show an embodiment of another multi-party audio call processing method provided in this application. The method includes the following steps.

Step 501: A user of a product or a service dials an access code of an (intelligent) call center system of the product or the service to initiate a call and access a media server.

Step 502: The media server applies for a call venue, and allocates a customer service agent A to the user.

Step 503: The user establishes a call connection to the customer service agent A.

Step 504: During the call, the customer service agent A finds that a requirement of the user exceeds a current capability range of the customer service agent A, and initiates a three-party help request to the media server.

Step 505: The media server allocates a customer service agent B, and routes the three-party help request to the customer service agent B.

Step 506: The customer service agent B accepts the request and joins the call, to form a three-party call.

In step 503 to step 506, the customer service agent B may alternatively act as a quality inspector to initiate real-time quality inspection on the call between the customer service agent A and the user, and join the call between the customer service agent A and the user, to form the three-party call.

Step 507: The media server enables a real-time reply priority decision-based concurrent speech blocking mechanism for the current call based on an event that the three-party call is successfully established.

Step 508: The media server notifies a service platform of the establishment of the three-party call, where content of the notification includes call information. The call information includes role information and the like of the customer service agents.

Step 509: After receiving the notification, the service platform initializes the role information of the customer service agents (where a role of the customer service agent A is a customer service agent, and a role of the customer service agent B is a customer service agent that is asked for help/quality inspector), quantities of valid replies (which are both 0), and last reply information (which is null) during the current three-party call.

Step 510: The service platform notifies the media server that initialization of real-time priority calculation information of the current call is completed.

Step 511: The user asks a question.

Step 512: The media server obtains an audio of the question asked by the user, and invokes an ASR system (which may be installed in the media server or another electronic device), to enable an operation of converting a speech into text and convert the audio of the question asked by the user into text.

Step 513: After successfully converting the audio into the text, the ASR system returns the text to the media server.

Step 514: The media server invokes an interface of an intelligent platform, to transfer, to the intelligent platform, the text returned by the ASR system.

Step 515: The intelligent platform identifies, from the received text according to a preset rule, a skill tag related to a topic of the question asked by the user and whether the user directly or indirectly specifies a reply party (that is, whether there is an intended customer service agent) when asking the question. If the user specifies a reply party, information (for example, an ID and a nickname of a customer service agent) about the intended reply party (the intended customer service agent) is further extracted.

Step 516: The intelligent platform returns an identification result (a consultation topic and the information about the intended reply party (if any)) to the media server.

Step 517: The media server pushes the identification result to the service platform.

Step 518: The service platform performs real-time priority calculation based on the identification result and a preset real-time priority calculation configuration, to determine a first customer service agent. The method is the same as the descriptions in the foregoing embodiment.

Step 519: The service platform returns a result of a real-time priority calculation decision (that is, information about the first customer service agent) to the media server.

Step 520: The media server pushes, to the customer service agent A, the audio of the question asked by the user.

Step 521: The customer service agent A answers the question asked by the user.

Step 522: The media server simultaneously pushes, to the customer service agent B, the question asked by the user.

Step 523: The customer service agent B answers the question asked by the user.

Step 524: The media server detects whether there is a concurrent speech input from an agent side. If there is a concurrent speech input from the agent side, the media server blocks an audio of an agent (which is currently the customer service agent A) with a low priority based on the result of the real-time priority decision returned by the service platform. In this embodiment, the currently determined first customer service agent is the customer service agent B.

Step 525: The media server transfers blocking information (which is information indicating that the audio of the customer service agent with a low priority is blocked) to an intelligent agent assistant side.

Step 526: The intelligent agent assistant provides the customer service agent A with a blocking information prompt.

Step 527: The media server pushes an audio of the customer service agent B with a high priority to a user side.

Step 528: The media server transfers current speaking information of a current call agent side to the service platform.

Step 529: The service platform updates the quantities of valid replies for the user during the current call (where currently, the quantity of valid replies of the customer service agent A is 0, and the quantity of valid replies of the customer service agent B is 1) and information about a customer service agent that provides a last reply for the user (which is currently information about the customer service agent B).

Step 530: The service platform notifies the media server that the update of data of the current call is completed.

When the user asks a question again, the user UE performs step 511 again, and a call center performs step 512 to step 530 again. A difference lies in that the determined first customer service agent may change to the customer service agent A. When the first customer service agent is the customer service agent A, the media server blocks the audio of the customer service agent B. In step 526, the customer service agent B is provided with a blocking prompt. In step 527, the media server pushes the audio of the customer service agent A to the user UE.

Step 531: The customer service agent that is asked for help/quality inspector (which is currently the customer service agent B) sends a request to the media server to exit the current call, and the three-party call ends.

Step 532: The media server disables the real-time priority reply decision-based concurrent speech blocking mechanism for the current call upon exiting a three-party call state.

Step 533: The media server notifies the service platform of call information of exiting the three-party call.

Step 534: The service platform clears the role information (where an identity of the customer service agent A is the customer service agent, and an identity of the customer service agent B is the customer service agent that is asked for help/quality inspector) of the two agents that exit the three-party call state, the quantities of valid replies (which are both cleared to 0), and the last reply agent information (which is cleared to null).

In this embodiment, a three-party session scenario is identified, and the real-time reply priority decision-based concurrent speech blocking mechanism is enabled and disabled as required at a session level. For example, a reply priority of a customer service agent is determined based on a combination of multi-dimensional configuration factors during a session, for example, a speaking topic (consultation topic) of the user, real-time identification of the intended reply party, a real-time session interaction statistic (for example, collecting statistics about a quantity of replies of the customer service agent), and work performance of the customer service agent on the current day (for example, collecting statistics about a service satisfaction rate). The audio of the customer service agent with a low priority in concurrent speeches from a customer service agent side is blocked. In addition, after receiving the blocking information of real-time notification from the intelligent agent assistant, the customer service agent with a low priority usually stops speaking. This resolves a problem that the concurrent speeches of the two customer service agents on a call center side interfere with each other in a scenario in which the call center performs the three-party call, avoids a problem of directly transferring, to the user side, inconsistent expressions caused by different real-time states and skill proficiency between the customer service agents, balances resource overheads and benefits, and improves customer experience.

According to the method and the electronic device provided in the foregoing embodiments of this application, the real-time reply priority decision-based concurrent speech blocking mechanism is enabled based on establishment and exit events of the multi-party audio call, the customer service agent (the first customer service agent) with a high priority and the customer service agent with a low priority are identified based on a priority calculation factor, the concurrent speech input of the customer service agent is detected in real time, the audio of the customer service agent with a low priority is blocked, and only the audio of the customer service agent with a high priority is pushed to the user side. For a case in which a plurality of participants on the call center side may speak simultaneously, audios of simultaneous speaking are prevented from being all transferred to the user side, to avoid mutual interference caused by simultaneously playing speeches of a plurality of participants, and improve user experience. In addition, inconsistent reply content caused by factors, for example, different skill proficiency and real-time working states of the customer service agents, is prevented from being directly transferred to the user side, to improve user experience and avoid a risk of inconsistent replies provided by a company to which the product or the service belongs.

It may be understood that some or all of the steps or operations in the foregoing embodiments are merely examples, and other operations or variants of various operations may be further performed in embodiments of this application. In addition, the steps may be performed in another sequence different from that presented in the foregoing embodiments, and not all the operations in the foregoing embodiments may be performed.

An embodiment of this application further provides an electronic device, including one or more processors, a memory, and one or more computer programs. The one or more computer programs are stored in the memory, the one or more computer programs include instructions, and when the instructions are executed by the device, the device is enabled to perform the method shown in the foregoing embodiments.

An embodiment of this application further provides a computer-readable storage medium. The computer-readable storage medium stores a computer program. When the computer program runs on a computer, the computer is enabled to perform the method provided in embodiments of this application.

An embodiment of this application further provides a computer program product. The computer program product includes a computer program. When the computer program runs on a computer, the computer is enabled to perform the method provided in embodiments of this application.

In embodiments of this application, "at least one" means one or more, and "a plurality of" means two or more. "And/or" describes an association relationship between associated objects, and indicates that there may be three relationships. For example, A and/or B may represent the following three cases: Only A exists, both A and B exist, and only B exists. A and B may be singular or plural. The character "/" generally indicates an "or" relationship between the associated objects. "At least one of the following" and similar expressions refer to any combination of these items, including a single item or any combination of a plurality of items. For example, at least one of a, b, and c may indicate a, b, c, a and b, a and c, b and c, or a, b, and c, where a, b, and c may be singular or plural.

A person of ordinary skill in the art may be aware that the units and algorithm steps described in embodiments disclosed in this specification can be implemented by a combination of electronic hardware, computer software, and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, when any function is implemented in a form of a software functional unit and sold or used as an independent product, the function may be stored on a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM for short), a random access memory (Random Access Memory, RAM for short), a magnetic disk, or an optical disc.

The foregoing descriptions are merely specific implementations of embodiments of this application. Any variation or replacement readily figured out by a person skilled in the art within the technical scope disclosed in this application shall fall within the protection scope in embodiments of this application. The protection scope of this application shall be subject to the protection scope of the claims.

## Claims

1. A multi-party audio call processing method, applied to an audio customer service scenario, and comprising:
determining a first customer service agent during a multi-party audio call when the multi-party audio call is established, wherein the multi-party audio call is an audio call performed simultaneously between a consultation party and a plurality of customer service agents, and the first customer service agent is a customer service agent with a highest priority in the plurality of customer service agents; and
when concurrent speeches of the plurality of customer service agents occur during the multi-party audio call, blocking an audio of a customer service agent other than the first customer service agent in the plurality of customer service agents, and pushing an audio of the first customer service agent to a terminal of the consultation party.

2. The method according to claim 1, wherein determining the first customer service agent during the multi-party audio call comprises: determining the first customer service agent based on a configuration factor, wherein the configuration factor comprises one or more of roles and skill matching degrees of the plurality of customer service agents, and an intended customer service agent of the consultation party for a current consultation topic, and the skill matching degrees are matching degrees between skill tags of the plurality of customer service agents and the current consultation topic.

3. The method according to claim 2, wherein the configuration factor further comprises one or more of last reply information, quantities of valid replies of the plurality of customer service agents during the multi-party audio call, and service satisfaction degrees and violation warnings of the plurality of customer service agents, and the last reply information is information about a customer service agent that provides a last reply for the consultation party during the multi-party audio call when the consultation party raises the current consultation topic; and
before determining the first customer service agent during the multi-party audio call, the method further comprises:
collecting statistics about one or more of the quantities of valid replies of the plurality of customer service agents during the multi-party audio call, and the service satisfaction degrees and the violation warnings of the plurality of customer service agents.

4. The method according to claim 2 or 3, wherein when there are a plurality of configuration factors, determining the first customer service agent based on the configuration factor comprises:
calculating a composite score of the configuration factors by using a weighted average or gradient mode; and
determining the first customer service agent based on the composite score.

5. The method according to claim 4, wherein before calculating the composite score of the configuration factors by using the weighted average or gradient mode, the method further comprises: determining whether the current consultation topic comprises the intended customer service agent;
determining the first customer service agent during the multi-party audio call comprises: using the intended customer service agent as the first customer service agent; and
calculating the composite score of the configuration factors by using the weighted average or gradient mode comprises: when the current consultation topic comprises no intended customer service agent, calculating a composite score of other configuration factors in the configuration factors by using the weighted average or gradient mode.

6. The method according to claim 4 or 5, wherein determining the first customer service agent based on the composite score comprises:
sequentially comparing individual scores of the plurality of customer service agents based on a priority sequence of preset configuration factors when composite scores are equal, wherein the individual score is an individual score of the preset configuration factor.

7. The method according to any one of claims 1 to 6, wherein after blocking the audio of the customer service agent other than the first customer service agent in the plurality of customer service agents, the method further comprises:
notifying the other customer service agent of the blocking.

8. The method according to any one of claims 1 to 7, wherein during the multi-party audio call, the method further comprises:
collecting statistics about at least one of service satisfaction rates and violation warning scores of the plurality of customer service agents; and/or
after pushing the audio of the first customer service agent to the terminal of the consultation party, the method further comprises:
updating, to information about the first customer service agent, the information about the customer service agent that provides the last reply for the consultation party.

9. A first electronic device, comprising a processor and a memory, wherein the memory stores a computer program, and the processor is configured to perform the following operations when running the computer program:
notifying a second electronic device when a multi-party audio call is established, to enable the second electronic device to determine a first customer service agent during the multi-party audio call, wherein the multi-party audio call is an audio call performed simultaneously between a consultation party and a plurality of customer service agents, and the first customer service agent is a customer service agent with a highest priority in the plurality of customer service agents;
receiving information about the first customer service agent sent by the second electronic device; and
when concurrent speeches occur during the multi-party audio call, blocking an audio of a customer service agent other than the first customer service agent in the plurality of customer service agents based on the information, and pushing an audio of the first customer service agent to a terminal of the consultation party.

10. The electronic device according to claim 9, wherein notifying the second electronic device comprises: sending, to the second electronic device, one or more pieces of information of roles of the plurality of customer service agents, a current consultation topic of the consultation party, and an intended customer service agent of the consultation party for the current consultation topic.

11. The electronic device according to claim 10, wherein before pushing one or more pieces of information of the current consultation topic and the intended customer service agent to the second electronic device, wherein the operations further comprise:
sending a consultation audio of the consultation party to a third electronic device, to convert the consultation audio into consultation text;
receiving the consultation text, and sending the consultation text to a fourth electronic device, to identify one or more of the current consultation topic and the intended customer service agent; and
receiving one or more pieces of information of the current consultation topic and the intended customer service agent that are returned by the fourth electronic device.

12. The electronic device according to any one of claims 9 to 11, wherein the processor is further configured to:
collect statistics about at least one of quantities of valid replies of the plurality of customer service agents during the multi-party audio call, and violation warning scores and service satisfaction rates of the plurality of customer service agents; and
push update information to the second electronic device, wherein the update information is at least one of the information about the first customer service agent, the quantities of valid replies of the plurality of customer service agents during the multi-party audio call, and the violation warning scores and the service satisfaction rates of the plurality of customer service agents.

13. The electronic device according to any one of claims 9 to 12, wherein the processor is further configured to: notify an intelligent agent assistant of the blocking operation, to provide a prompt for the other customer service agent.

14. A second electronic device, comprising a processor and a memory, wherein the memory stores a computer program, and the processor is configured to perform the following operations when running the computer program:
receiving a notification sent by a first electronic device when a multi-party audio call is established;
determining a first customer service agent based on the notification, wherein the multi-party audio call is an audio call performed simultaneously between a consultation party and a plurality of customer service agents, and the first customer service agent is a customer service agent with a highest priority in the plurality of customer service agents; and
sending information about the first customer service agent to the first electronic device.

15. The electronic device according to claim 14, wherein receiving the notification sent by the first electronic device when the multi-party audio call is established comprises:
receiving at least one piece of information of roles of the plurality of customer service agents, a current consultation topic of the consultant, and an intended customer service agent of the consultation party that are pushed by the first electronic device when the multi-party audio call is established; and
determining the first customer service agent based on the notification comprises: determining the first customer service agent based on at least one piece of information of the roles of the plurality of customer service agents, the current consultation topic, and the intended customer service agent.

16. The electronic device according to claim 14 or 15, wherein determining the first customer service agent based on the notification further comprises:
determining the first customer service agent based on at least one of last reply information, and service satisfaction rates and violation warning scores of the plurality of customer service agents, wherein the last reply information is information about a customer service agent that provides a last reply for the consultation party during the multi-party audio call when the consultation party raises the current consultation topic.

17. The electronic device according to claim 16, wherein the processor is further configured to:
update the last reply information to the information about the first customer service agent, and collect statistics about at least one of the service satisfaction rates and the violation warning scores of the plurality of customer service agents, and quantities of valid replies of the plurality of customer service agents during the multi-party audio call; or
before determining the first customer service agent based on the notification, the processor is further configured to:
receive at least one of quantities of valid replies of the plurality of customer service agents during the multi-party audio call and the violation warning scores of the plurality of customer service agents that are sent by the first electronic device; and
update at least one of the service satisfaction rates and the violation warning scores of the plurality of customer service agents, and the quantities of valid replies of the plurality of customer service agents during the multi-party audio call.

18. A third electronic device, comprising a processor and a memory, wherein the memory stores a computer program, and the processor is configured to perform the following operations when running the computer program:
receiving an audio sent by a first electronic device, and converting the audio into text, wherein the audio is a consultation audio of a consultation party during a multi-party audio call; and
returning the text to the first electronic device, to determine a first customer service agent, wherein the first customer service agent is a customer service agent with a highest priority in a plurality of customer service agents during the multi-party audio call.

19. A fourth electronic device, comprising a processor and a memory, wherein the memory stores a computer program, and the processor is configured to perform the following operations when running the computer program:
receiving text sent by a first electronic device, and identifying, from the text, at least one of a consultation topic and an intended customer service agent of a consultation party during a multi-party audio call; and
returning at least one of the consultation topic and the intended customer service agent to the first electronic device, to determine a first customer service agent, wherein the first customer service agent is a customer service agent with a highest priority in a plurality of customer service agents during the multi-party audio call.

20. A chip system, performing the method according to any one of claims 1 to 8 or the operations performed by the processor of the electronic device according to any one of claims 9 to 19.

21. A computer-readable storage medium, wherein the computer-readable storage medium stores a computer program, and when the computer program runs on a computer, the computer is enabled to perform the method according to any one of claims 1 to 8 or the operations performed by the processor of the electronic device according to any one of claims 9 to 19.
